# EUROPÄISCHE PATENTSCHRIFT

(11) **EP 0 757 638 B1**
(45) Veröffentlichungstag und Bekanntmachung des Hinweises auf die Patenterteilung: **21.01.1998**
(21) Anmeldenummer: 95917336.0
(22) Anmeldetag: 19.04.1995
(51) Int. Cl.: B60T 8/00

(54) **SCHALTUNGSANORDNUNG FÜR EINE BREMSANLAGE MIT EBV**
CIRCUIT ARRANGEMENT FOR A BRAKING SYSTEM WITH ELECTRONIC BRAKING-FORCE DISTRIBUTION
CIRCUITERIE POUR SYSTEMES DE FREINAGE A REPARTITION ELECTRONIQUE DE LA FORCE DE FREINAGE

(30) Priorität: 29.04.1994 DE 4414980
(43) Veröffentlichungstag der Anmeldung: 12.02.1997
(73) Patentinhaber: ITT Automotive Europe GmbH, 60488 Frankfurt (DE)
(72) Erfinder: FENNEL, Helmut, D-65812 Bad Soden (DE); EHMER, Norbert, D-65760 Eschborn (DE); KOLBE, Alexander, D-64846 Gross-Zimmern (DE); SCHMIDT, Robert, D-56477 Rennerod (DE); PRÖGER, Thomas, D-63322 Rödermark (DE)
(86) Internationale Anmeldenummer: EP9501467
(87) Internationale Veröffentlichungsnummer: WO9529829

(56) Entgegenhaltungen:
- WO-A-93/12960
- DE-A- 3 136 944
- DE-A- 4 037 175
- DE-A- 4 226 646
- DE-C- 3 941 409
- GB-A- 2 158 533
- US-A- 4 005 911

## Beschreibung

Die Erfindung bezieht sich auf eine Schaltungsanordnung für eine Bremsanlage mit elektronischer Regelung der Bremskraftverteilung auf die Radbremsen der Vorder- und der Hinterachse, im folgenden EBV genannt, und mit elektronischer Blockierschutz- und/oder Antriebsschlupfregelung, im folgenden ABS und/oder ASR genannt, mit elektrisch steuerbaren Hydraulikventilen in den zu den Radbremsen führenden Druckmittelwegen und in den Rückflußwegen, über die Druckmittel in den Druckabbauphasen abgeleitet wird, mit Radsensoren zur Ermittlung des Drehverhaltens der elnzelnen Räder und mit elektrischen Schaltungen zur Auswertung der Sensorsignale, zur Bildung einer Fahrzeugreferenzgeschwindigkeit und zur Erzeugung der Bremsdruck- bzw. Ventil-Steuersignale, mit Schaltungen zur Überwachung der Bremsanlage und zur teilweisen oder vollständigen Abschaltung oder Umschaltung der Regelung in Abhängigkeit von Defekten oder Fehlfunktionen und/oder von der jeweiligen Regel- oder Fahrsituation.

Aus der deutschen Patentschrift DE 33 23 402 C2 ist bereits eine blockiergeschützte Bremsanlage bekannt, die elektrisch betätigbare Hydraulikventile besitzt, welche sowohl zur Blockierschutzregelung als auch zur Regelung der Bremskraftverteilung auf die Vorderachse und Hinterachse zwecks Anpassung an die statische und dynamische Belastung der Fahrzeugachsen herangezogen werden. Für dieseelektronische Regelung der Bremskraftverteilung bei Teilbremsungen, d.h. außerhalb der Blockierschutzregelung, werden die mit Hilfe von Radsensoren gewonnenen Informationen über das Drehverhalten der einzelnen Räder ausgewertet. Durch Ansteuerung der Hinterrad-Hydraulikventile wird der Bremsschlupf der Hinterräder auf einen bestimmten Wert oder Prozentsatz des Vorderrad-Bremsschlupfes begrenzt. Da sowohl die Hydraulikventile in den Anschlußleitungen der Hinteradbremsen, als auch die Radsensoren und die elektrischen Schaltungen zur Auswertung der Sensorsignale für die Blockierschutzregelung ohnehin benötigt werden, ist für die Erweiterung auf EBV nur ein sehr geringer Mehraufwand erforderlich. Allerdings sollte Vorsorge getroffen werden, daß auch bei Ausfall der Stromversorgung oder der elektronischen Regelung keine Überbremsung der Hinterräder eintreten kann. Im allgemeinen ist aus Sicherheitsgründen trotz der elektronischen Regelung der Bremskraftverteilung ein herkömmlicher, mechanischer oder hydraulischer Bremsdruckminderer oder Bremskraftregler zusätzlich erforderlich.

Zur Überwachung der elektronischen und hydraulischen Komponenten elektronisch geregelter Bremsanlagen sind zahlreiche Vorschläge und Maßnahmen bekannt. Im allgemeinen ist es Ziel dieser Überwachung, beim Auftreten von Defekten oder Fehlfunktionen die Regelung sofort oder nach Beendigung des momentanen Regelungsvorganges oder der gefährdeten Regelungssituation abzuschalten, um zumindest die konventionelle, d.h. ungeregelte Funktion der Bremsanlage sicherzustellen. Beispielsweise sind aus der Offenlegungsschrift DE 27 12 693 A1 Maßnahmen zur Überwachung der Radsensoren eines Antiblockierregelsystems (ABS) bekannt. Nach dieser Schrift wird nach der Erkennung eines gestörten Radsensors die Abhängigkeit der Regelung von dem gestörten Signal aufgehoben. Statt dessen wird die Blockierschutzregelung von dem intakten Radsensor und dem zugehörigen Regelkanal übernommen. Außerdem werden in diesem Fehlerfalle die Druckabbauphasen und die Konstanthaltephasen für beide Radbremsen verlängert. Durch diesen Übergang von der Individualregelung auf die parallele Regelung des Bremsdruckes soll das Entstehen hoher Giermomente, ausgelöst durch ein Blockieren des Rades oder durch eine drucklose Radbremse, verhindert werden.

In der DE 40 37 175 A1 ist eine Antiblockierbremsanlage mit Ausfallmeldeschaltung beschrieben. Zur Stromversorgung der elekrisch betätigbaren Hydraulikventile ist ein Anschluß über ein Hauptrelais und, parallel dazu, über eine Entkoppeldiode und eine Warnlampe, die nur begrenzten Strom zuläßt, vorgesehen. Mit Einzelprüfpulsen, die durch Rückkopplung erzeugt werden, wird die Funktion der einzelnen Hydraulikventile überwacht. Um einen Ausfall des Hauptrelais erkennen zu können, werden alle Ventile gleichzeitig mit Prüfpulsen angesteuert, was, wenn die Stromversorgung über das Hauptrelais unterbrochen ist, einen Einbruch der über die Warnlampe zugeführten Versorgungsspannung zur Folge hat. Dieser Spannungseinbruch wird zur Fehlererkennung ausgewertet.

Ferner ist es bereits bekannt, zur Erhöhung der Funktionssicherheit einer Bremsanlage mit EBV die Reaktion der Vorderräder auf den Bremsdruck regelmäßig zu testen. Hierzu wird während eines Bremsvorganges ein kurzer, für die Bremswirkung vernachlässigbarer Druckabbaupuls aufgebracht und die Reaktion des Vorderades auf diesen Druckabbaupuls ausgewertet (DE 42 24 971 A1).

Alle bekannten Maßnahmen sind lediglich in der Lage, bestimmte Fehler zu erkennen und deren Auswirkung auf die Fahrsicherheit zu verringern. Der Erfindung liegt dagegen die Aufgabe zugrunde, ein Sicherheitskonzept für eine Bremsanlage mit EBV und ABS/ASR zu verwirklichen, das beim Auftreten von Defekten oder Fehlfunktionen einerseits die Fahrstabilität und Bremsenfunktion sicherstellt, andererseits die Regelung nur so weit beeinträchtigt, wie dies in Anbetracht des aufgetretenen Fehlers notwendig ist.

Es hat sich gezeigt, daß diese Aufgabe mit den Schaltungsanordnungen nach Anspruch 1 oder Anspruch 2 gelöst werden kann. Danach besteht die Besonderheit der eingangs genannten Schaltungsanordnung in einem Bündel von Maßnahmen. Bei Ausfall eines Sensors (Anspruch 1), der durch einen Kurzschluß oder eine Leitungsunterbrechung verursacht sein kann, oder bei einem fehlerhaften Sensorsignal, das sich z.B. durch Vergleich mehrerer Sensorsignale und durch Plausibilitätsüberprüfungen erkennen läßt, wird die Fahrzeugreferenzgeschwindigkeit auf Basis der intakten Sensoren gebildet, eine EBV-Funktion weiterhin zugelassen, eine ABS- oder ASR-Funktion dagegen eingeschränkt oder unterbunden. Wenn der defekte Sensor ein Hinterradsensor ist, werden die Hinterräder synchron geregelt; beim Absinken der Versorgungsspannung unter einen vorgegebenen Grenzwert, solange die Versorgungsspannung noch über einem vorgegebenen zweiten, niedrigeren Grenzwert liegt, wird ebenfalls eine EBV-Funktion weiterhin zugelassen, eine ABS-/ASR-Funktion dagegen eingeschränkt oder unterbunden.

Bei der Schaltungsanordnung nach Anspruch 2 wird ein Sensorausfall pro Achse zugelassen; auf Basis eines intakten Sensors pro Achse ist immer noch eine EBV-Funktion möglich.

Handelt es sich um eine Bremsanlage, die mit einem Pumpensystem zur Hilfsdruckversorgung oder zur Rückförderung von Druckmittel, das in den Bremsdruckabbauphasen aus den Radbremsen abgeleitet wurde, ausgerüstet ist, wird zweckmäßigerweise bei einem Defekt des Pumpensystems die EBV-Funktion weiterhin zugelassen, eine ABS/ASR-Funktion dagegen eingeschränkt oder unterbunden.

Durch die Kombination der vorgenannten Maßnahmen wird also auch beim Auftreten von Defekten oder Fehlfunktionen - soweit möglich - die elektronische Regelung der Bremskraftverteilung weiterhin aufrechterhalten. Dadurch ist sichergestellt, daß der Fahrer auch in dieser Situation das Fahrzeug beherrschen kann. Der Fehler wird signalisiert. Beispielsweise kann durch Aufleuchten einer Warnlampe das Abschalten der ABS/ASR-Funktion, durch zusätzliches Aufleuchten einer zweiten Warnlampe die Abschaltung der gesamten Regelung, einschließlich des EBV, dem Fahrer zur Kenntnis gebracht werden. Nach Beendigung des Bremsvorgangs und damit in einer unkritischen Situation kann sich dann der Fahrer auf die als Folge der Regelungsabschaltung veränderte Charakteristik der Bremskraftverteilung einstellen. Es ist auch möglich, nach Ausgabe des Warnsignals die EBV-Funktion in der als Folge des Fehlers eingeschränkten Weise aufrechtzuerhalten. Im allgemeinen ist die Fahrstabilität und Bremsenfunktion dann immer noch günstiger als bei einem vollständigen Verzicht auf die Regelung.

Nach einem vorteilhaften Ausführungbeispiel der erfindungsgemäßen Schaltungsanordnung wird bei dem Auftreten eines Fehlers, der eine Betätigung eines oder mehrerer der Vorderrad-Hydraulikventile oder eine Betätigung eines Hinterrad-Einlaßventils verhindert, die EBV-Funktion weiterhin zugelassen, eine ABS-/ASR-Funkion dagegen unterbunden. Bei einem Fehler, der die Betätigung eines Hinterrad-Auslaßventils verhindert, wird ebenfalls die EBV-Funktion aufrechterhalten und das Einlaßventil des Rades mit dem fehlerhaften Auslaßventil auf Sperren umgeschaltet, um eine übermäßige Druckerhöhung an der Hinterachse zu vermeiden.

Bei Ausfall oder Fehlfunktion eines Vorderradsensors wird grundsätzlich eine Regelung des Vorderrad-Bremsdruckes im ABS- oder ASR-Modus unterbunden.

Weitere Einzelheiten der Erfindung gehen aus der folgenden Beschreibung von Ausführungsbeispielen anhand der beigefügten Abbildungen hervor. Es zeigen
- Fig. 1: in schematisch vereinfachter Darstellung die wesentlichen Komponenten einer Bremsanlage mit EBV und ABS, und
- Fig. 2: im Blockschaltbild die wesentlichen elektronischen Komponenten einer für die Bremsanlage nach Fig. 1 vorgesehenen Schaltungsanordnung nach der Erfindung.

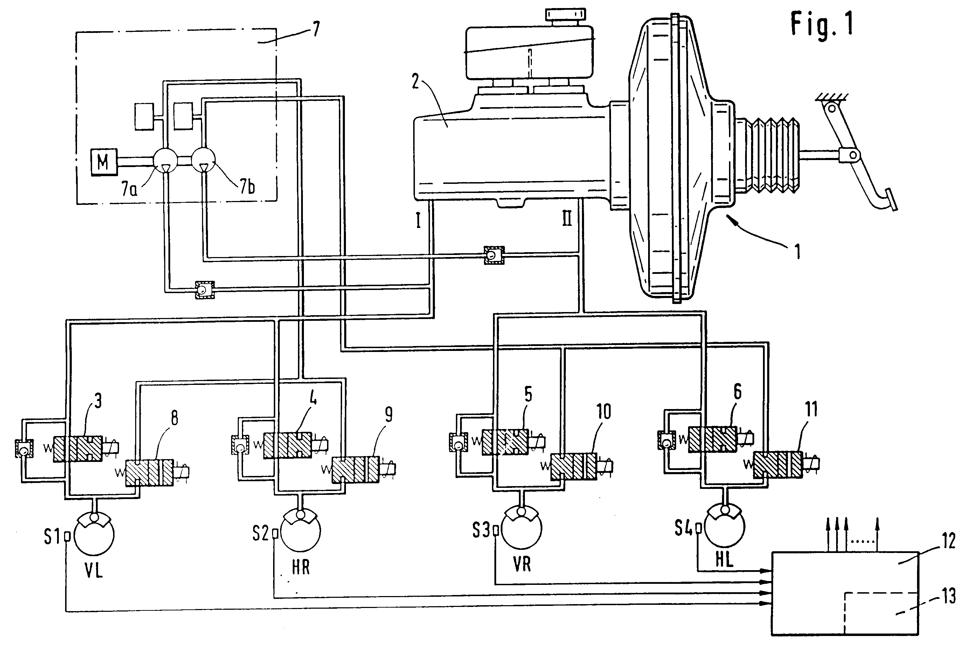

Die Bremsanlage nach Fig. 1 besteht aus einem Bremsdruckgeber 1, der einen Tandem-Hauptzylinder 2 aufweist, an den die Radbremsen über zwei hydraulisch getrennte Bremskreise I,II angeschlossen sind. Im dargestellten Ausführungsbeispiel handelt es sich um eine Bremsanlage mit diagonaler Bremskreisaufteilung. Der Bremskreis I führt zu dem linken Vorderrad VL und rechten Hinterrad HR, der Bremskreis II zu den beiden anderen Rädern VR,HL. Natürlich läßt sich die Erfindung auch bei jeder anderen Art der Bremskreisaufteilung verwirklichen.

In die Druckmittelwege, die von dem Hauptzylinder 2 zu den einzelnen Radbremsen der Räder VL,HR,VR,HL führen, ist je ein in der Ruhestellung auf Durchlaß geschaltetes, elektrisch betätigbares Einlaßventil 3 bis 6 eingefügt. In Rückflußleitungen, die die Radbremsen der einzelnen Räder mit einem hydraulischen Pumpensystem 7 verbinden, sind in der Ruhestellung gesperrte, ebenfalls elektrisch betätigbare Auslaßventile 8 bis 11 eingesetzt. Sowohl die Einlaßventile 3 bis 6, als auch die Auslaßventile 8 bis 11 sind 2/2-Wegeventile, die bei Ansteuerung ihre zweite Schaltposition einnehmen, in der die Einlaßventile den Durchfluß sperren, die Auslaßventile dagegen den Abfluß von Druckmittel aus der jeweiligen Radbremse zu der Saugseite der Pumpe 7a oder 7b des Pumpensystem 7 zulassen.

Für die elektronische Regelung der Bremskraftverteilung werden lediglich die zu den Hinterradbremsen gehörenden Hydraulikventile 4,9;6,11 benötigt. Für die Blockierschutzregelung werden dagegen alle Einlaß- und Auslaßventile 3 bis 6 und 8 bis 11 gebraucht.

Jedes Fahrzeugrad VL,HR,VR,HL ist mit einem Radsensor S1 bis S4 ausgerüstet, dessen Ausgangssignale in einem Regler 12 ausgewertet werden, der elektronische Schaltungen zur Regelung der Bremskraftverteilung und zur Blockierschutzregelung enthält. In diesem Regler 12 sind auch die Schaltungen zur Überwachung der Bremsanlage und zur Umschaltung der Regelungsweise (auf ein anderes Regelungsschema oder zur teilweisen oder vollständigen Abschaltung der Regelung in Abhängigkeit von der jeweiligen Fehlfunktion untergebracht. Diese Überwachungsschaltungen sind durch den gestrichelt abgetrennten Teil 13 im Regler 12 symbolisiert.

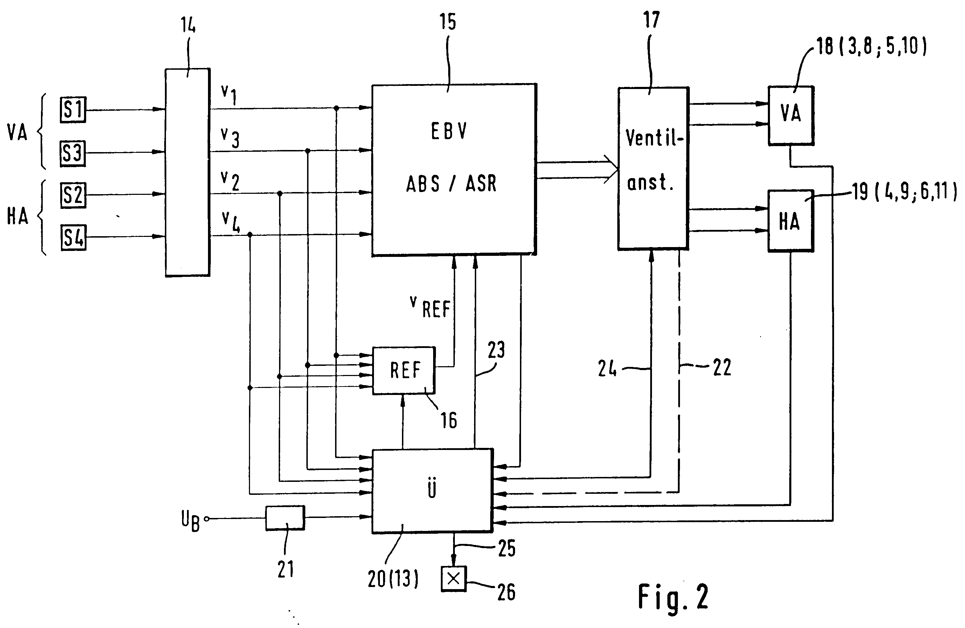

Die Schaltungsanordnung nach Fig. 2 enthält eine Signalaufbereitungsschaltung 14, in der die mit Hilfe der Radsensoren S1 bis S4 gewonnenen Signale aufbereitet werden. Die Sensoren S1 und S3 befinden sich an den Rädern der Vorderachse VA, die Sensoren S2,S4 an den Rädern der Hinterachse HA.

Die aufbereiteten Sensorsignale werden in einer Reglerlogik 15, die einen oder mehrere Mikrocomputer oder Microcontroller zur Auswertung der Eingangssignale enthalten kann, verarbeitet. Dieser Reglerlogik 15 werden außer den v₁ bis v₄, die die aufbereiteten Geschwindigkeitssignale der einzelnen Räder darstellen, ein der Fahrzeuggeschwindigkeit angenähertes Signal, nämlich die Fahrzeugreferenzgeschwindigkeit v_{REF}zugeführt. Dieses Referenzsignal v_{REF}wird in bekannter Weise durch logische Verknüpfung und Bewertung der einzelnen Radgeschwindigkeitssignale v₁ bis v₄ mit Hilfe eines Schaltblocks 16 gewonnen.

In der Reglerlogik 15 werden nach vorgegebenen Algorithmen die Signale zur Bremsdrucksteuerung bzw. zur Ansteuerung der Hydraulikventile 3 bis 6 und 8 bis 11, der Hydraulikpumpen 7 usw. erzeugt. Mit diesen Signalen wird die elektronische Regelung der Bremskraftverteilung (EBV) sowie die Blockierschutzregelung und/oder Antriebsschlupfregelung (ABS und/oder ASR) durchgeführt.

Ein Schaltblock 17 symbolisiert die sogen. Ventilansteuerung, in der die Ausgangssignale der Reglerlogik 15 in Ventilsteuersignale umgesetzt werden. An die Ausgänge der Ventilansteuerung 17 sind die zu einer Einheit 18 zusammengefaßten hydraulischen Ventile, die zur Steuerung des Bremsdruckes in den Radbremsen an der Vorderachse VA dienen, angeschlossen; 19 symbolisiert die Gesamtheit der Hydraulikventile der Hinterachse HA. In dem Ausführungsbeispiel nach Fig. 1 gehören zu der Vorderachse (18) die Einlaß-/Auslaßventilpaare 3,8;5,10, zur Hinterachse (19) die Ventilpaare 4,9;6,11.

Mit 20 ist in Fig. 2 die Gesamtheit der Überwachungsschaltungen, die den Überwachungs-Teil 13 nach Fig. 1 entspricht, bezeichnet. Als Eingangssignale werden der Überwachung die von den Sensoren S1 bis S4 stammenden, aufbereiteten Geschwindigkeitssignale v₁ bis v₄ zugeführt. Außerdem führt eine Spannungsüberwachung 21, die die Batteriespannung U_{B} des Fahrzeugs auf das Einhalten vorgegebener Grenzwerte überwacht, zu der Überwachung 20.

Der Schaltzustand der Hydraulikventile wird der Überwachung 20 ebenfalls gemeldet. Durch Vergleich des Schaltzustandes, logische Verknüpfung mit den Geschwindigkeitssignalen und/oder mit Informationen, die die Reglerlogik 15 liefert, werden in der Überwachungsschaltung 20 Hinweise auf das Vorliegen von Defekten oder Fehlfunktionen der Sensoren, auf den momentanen Reibwert, auf den Zustand der Energieversorgung und auf die momentane Regel- oder Fahrsituation gewonnen und ausgewertet.

In Fig. 2 ist außerdem eine Signalleitung 22, die von der Ventilansteuerung 17 zu der Überwachung 20 führt, gestrichelt dargestellt. Über diese Leitung werden nach einem Ausführungsbeispiel der Erfindung der Überwachung 20 Informationen zugeführt, die z.B. durch Vergleich mit Ventilbetätigungssignalen auf Defekte oder Fehlfunktionen schließen lassen.

Beim Erkennen eines Defektes oder einer Fehlfunktion greift die Überwachung 20 in der bereits beschriebenen Weise in die EBV- und/oder ABS-/ASR-Regelung und/oder in die Ventilansteuerung 17 ein. Hierzu sind die Signalleitungen 23,24 vorgesehen. Eine weitere Signalleitung 25, die hier zu einer Warnlampe 26 führt, dient zur optischen oder akustischen Signalisierung eines Fehlerzustandes.

Prinzipiell ist es auch möglich, nach dem Erkennen eines Defektes oder einer Fehlfunktion auf eine andere Weise in den Regelablauf einzugreifen, z.B. durch direkte Ansteuerung der Hydraulikventile 18,19.

Die anhand der Fig. 2 erläuterten Schaltfunktionen werden zweckmäßigerweise durch entsprechende Programmierung eines Microcomputers, der die Daten verarbeitet und auswertet und der die EBV- sowie ABS/ASR-Regelung ausführt, verwirklicht.

## Patentansprüche

1. Schaltungsanordnung für eine Bremsanlage mit elektronischer Regelung der Bremskraftverteilung auf die Radbremsen der Vorder- und der Hinterachse, im folgenden EBV genannt, und mit elektronischer Blockierschutzregelung, im folgenden ABS genannt, und/oder Antriebsschlupfregelung, im folgenden ASR genannt,
mit elektrisch steuerbaren Hydraulikventilen (3-6,8-11) in den zu den Radbremsen führenden Druckmittelwegen und in den Rückflußwegen, über die Druckmittel in den Druckabbauphasen abgeleitet wird,
mit Radsensoren (S1-S4) zur Ermittlung des Drehverhaltens der einzelnen Räder(VL,VR,HL,HR) und mit elektrischen Schaltungen (12;14-17) zur Auswertung der Sensorsignale, zur Bildung einer Fahrzeugreferenzgeschwindigkeit und zur Erzeugung der Bremsdruck- bzw. Ventil-Steuersignale,
mit Schaltungen(13;20) zur Überwachung der Bremsanlage und zur teilweisen oder vollständigen Abschaltung oder zur Umschaltung der Regelung in Abhängigkeit von Defekten oder Fehlfunktionen und/oder von der jeweiligen Regel- oder Fahrsituation, dadurch **gekennzeichnet**,
daß bei Ausfall eines Sensors (S1 bis S4) oder bei einem fehlerhaften Sensorsignal die Fahrzeugreferenzgeschwindigkeit (v_{REF}) auf Basis der intakten Sensoren gebildet, eine EBV-Funktion weiterhin zugelassen, eine ABS- oder ASR-Funktion dagegen eingeschränkt oder unterbunden wird,
daß beide Hinterräder (HR,HL) synchron geregelt werden, wenn der defekte Sensor ein Hinterradsensor (S2 oder S4) ist, und
daß beim Absinken der Versorgungsspannung unter einen vorgegebenen Grenzwert, solange die Versorgungsspannung (U_{B}) noch über einem vorgegebenen zweiten, niedrigeren Grenzwert liegt, ebenfalls eine EBV-Funktion zugelassen, eine ABS/ASR-Funktion dagegen eingeschränkt oder unterbunden wird.

2. Schaltungsanordnung für eine Bremsanlage mit
elektronischer Regelung der Bremskraftverteilung auf die Radbremsen der Vorder- und der Hinterachse, im folgenden EBV genannt, und mit elektronischer Blockierschutzregelung, im folgenden ABS genannt, und/oder Antriebsschlupfregelung, im folgenden ASR genannt,
mit elektrisch steuerbaren Hydraulikventilen (3-6,8-11) in den zu den Radbremsen führenden Druckmittelwegen und in den Rückflußwegen, mit Radsensoren (S1-S4) zur Ermittlung des Drehverhaltens der einzelnen Räder (VL,VR,HL,HR) und mit elektrischen Schaltungen (12;14-17) zur Auswertung der Sensorsignale, zur Bildung einer Fahrzeugreferenzgeschwindigkeit und zur Erzeugung der Bremsdruck- bzw. Ventil-Steuersignale, mit Schaltungen (13;20) zur Überwachung der Bremsanlage und zur teilweisen oder vollständigen Abschaltung oder zur Umschaltung der Regelung in Abhängigkeit von Defekten oder Fehlfunktionen und/oder von der jeweiligen Regel- oder Fahrsituation, dadurch **gekennzeichnet,**
daß bei Ausfall oder bei fehlerhaftem Signal von einem der beiden Vorderradsensoren (S1,S3) und von einem der beiden Hinterradsensoren (S2,S4) die Fahrzeugreferenzgeschwindigkeit (v_{REF}) auf Basis der intakten Sensoren gebildet, eine EBV-Funktion weiterhin zugelassen, eine ABS- oder ASR-Funktion dagegen eingeschränkt oder unterbunden wird,
daß beide Hinterräder (HR,HL) synchron geregelt werden, wenn der defekte Sensor ein Hinterradsensor (S2 oder S4) ist, und
daß beim Absinken der Versorgungsspannung unter einen vorgegebenen Grenzwert, solange die Versorgungsspannung (U_{B}) noch über einem vorgegebenen zweiten, niedrigeren Grenzwert liegt, ebenfalls eine EBV-Funktion zugelassen, eine ABS/ASR-Funktion dagegen eingeschränkt oder unterbunden wird.

3. Schaltungsanordnung nach Anspruch 1 oder 2, dadurch **gekennzeichnet**, daß diese für eine Bremsanlage mit einem Pumpensystem (7) zur Hilfsdruckversorgung oder zur Rückförderung des Druckmittels vorgesehen ist und daß bei einem Defekt oder Fehlfunktion des Pumpensystems (7) weiterhin eine EBV-Funktion zugelassen, eine ABS/ASR-Funktion dagegen eingeschränkt oder unterbunden wird.

4. Schaltungsanordnung nach einem oder mehreren der Ansprüche 1 bis 3, dadurch **gekennzeichnet**, daß bei einem Fehler, der eine Betätigung eines oder mehrerer der Vorderrad-Hydraulikventile (3,8;5,10) verhindert, die EBV-Funktion weiterhin zugelassen, eine ABS-/ASR-Funktion dagegen unterbunden wird.

5. Schaltungsanordnung nach einem oder mehreren der Ansprüche 1 bis 4, dadurch **gekennzeichnet**, daß bei einem Fehler, der eine Betätigung eines Hinterrad-Einlaßentils (4 oder 6) verhindert, die EBV-Funktion weiterhin zugelassen, eine ABS-/ASR-Funktion dagegen unterbunden wird.

6. Schaltungsanordnung nach einem oder mehreren der Ansprüche 1 bis 5, dadurch **gekennzeichnet**, daß bei einem Fehler, der eine Betätigung eines Hinterrad-Auslaßventils (9 oder 11) verhindert, die EBV-Funktion aufrechterhalten und das Einlaßventil (4 bzw. 6) des Rades (HR bzw. HL) mit dem fehlerhaften Auslaßventil (9 bzw. 11) auf Sperren umgeschaltet wird.

7. Schaltungsanordnung nach einem oder mehreren der Ansprüche 1 bis 6, dadurch **gekennzeichnet**, daß bei Ausfall oder Fehlfunktion eines Vorderradsensors (S1,S3) eine Regelung des Vorderrad-Bremsdruckes im ABS- oder ASR-Modus unterbunden wird.

8. Schaltungsanordnung nach einem oder mehreren der Ansprüche 1 bis 7, dadurch **gekennzeichnet,** daß das Auftreten eines Defektes, bei dem nur die ABS/ASR-Funktion eingeschränkt oder unterbunden wird, und das Auftreten eines Defektes, bei dem auch die EBV-Funktion unterbunden wird, unterschiedliche Warnsignale auslösen.

9. Schaltungsanordnung nach Anspruch 8, dadurch **gekennzeichnet**, daß bei einem Defekt, der nur die ABS/ASR-Funktion einschränkt oder unterbindet, eine erste Warnlampe, bei Abschaltung der gesamten Regelung (EBV und ABS/ASR) zusätzlich eine zweite Warnlampe aufleuchtet.

## Claims

1. Circuit for a brake system with electronic control of the brake force distribution to the wheel brakes of the front and rear axles, hereinbelow referred to as EBV, and with an electronic anti-lock control system, hereinbelow referred to as ABS, and/or a traction slip control system, hereinbelow referred to as TCS, including
electrically controllable hydraulic valves (3,4,5, and 6,8, 9,10, and 11) in the pressure fluid conduits leading to the wheel brakes and in the return conduits, by which pressure fluid is discharged in the pressure reduction periods,
wheel sensors (S1-S4) to determine the rotational behavior of the individual wheels (VL,VR,HL,HR), and electric circuits (12;14,15,16, and 17) to evaluate the sensor signals, to produce a vehicle reference speed and to generate the braking-pressure control signals or valve control signals,
circuits (13;20) to monitor the brake system and to partially or completely disconnect or change the control over in response to defects or malfunctions and/or in response to the respective control situation or driving situation,
**characterized** in that upon failure of a sensor (S1 to S4) or in the presence of an incorrect sensor signal, the vehicle reference speed (v_{REF}) is produced on the basis of the intact sensors, an electronic brake force distribution control function is still possible, but an ABS or TCS function is limited or prevented, in that both rear wheels (HR,HL) are controlled synchronously when the defective sensor is a rear-wheel sensor (S2 or S4), and
in that when the supply voltage drops below a predetermined limit value, as long as the supply voltage (U_{B}) is still in excess of a predetermined, second, lower limit value, an electronic brake force distribution control function is still possible, but an ABS/TCS function is limited or prevented.

2. Circuit for a brake system with electronic control of the brake force distribution to the wheel brakes of the front and rear axles, hereinbelow referred to as EBV, and with an electronic anti-lock control system, hereinbelow referred to as ABS, and/or a traction slip control system, hereinbelow referred to as TCS, including
electrically controllable hydraulic valves (3,4,5, and 6, 8,9,10, and 11) in the pressure fluid conduits leading to the wheel brakes and in the return conduits, wheel sensors (S1-S4) to determine the rotational behavior of the individual wheels (VL,VR,HL,HR) and electric circuits (12;14,15,16, and 17) to evaluate the sensor signals, to produce a vehicle reference speed and to generate the braking-pressure control signals or valve control signals, circuits (13;20) to monitor the brake system and to partially or completely disconnect or change the control over in response to defects or malfunctions and/or in response to the respective control situation or driving situation,
**characterized** in that upon failure or in the presence of an incorrect signal of any one of the two front-wheel sensors (S1,S3) and any one of the two rear-wheel sensors (S2,S4), the vehicle reference speed (v_{REF}) is produced on the basis of the intact sensors, an electronic brake force distribution control function is still possible, but an ABS or TCS function is limited or prevented,
in that both rear wheels (HR,HL) are controlled synchronously when the defective sensor is a rear-wheel sensor (S2 or S4), and
in that when the supply voltage drops below a predetermined limit value, as long as the supply voltage (U_{B}) is still in excess of a predetermined, second, lower limit value, an electronic brake force distribution control function is also possible, but an ABS/TCS function is limited or prevented.

3. Circuit as claimed in claim 1 or claim 2,
**characterized** in that the circuit is provided for use in a brake system including a pump system (7) for the auxiliary pressure supply or for the return of pressure fluid, and in that an electronic brake force distribution control function is still possible, but an ABS/TCS function is limited or prevented, when a defect or malfunction of the pump system (7) occurs.

4. Circuit as claimed in any one or more of claims 1 to 3,
**characterized** in that the electronic brake force distribution control function is still possible, but an ABS/TCS function is prevented, upon the occurrence of a defect which prevents the operation of one or a plurality of the front-wheel hydraulic valves (3,8;5,10).

5. Circuit as claimed in any one or more of claims 1 to 4,
**characterized** in that the electronic brake force distribution control function is still possible, but an ABS/TCS function is prevented, upon the occurrence of a defect which prevents the operation of a rear-wheel inlet valve (4 or 6).

6. Circuit as claimed in any one or more of claims 1 to 5,
**characterized** in that when a defect occurs which prevents the operation of a rear-wheel outlet valve (9 or 11), the electronic brake force distribution control function is maintained, and the inlet valve (4 or 6, respectively) of the wheel (HR or HL, respectively) having the defective outlet valve (9 or 11, respectively) is switched over to close.

7. Circuit as claimed in any one or more of claims 1 to 6,
**characterized** in that control of the front-wheel braking pressure in the ABS or TCS mode is prevented upon failure or malfunction of a front-wheel sensor (S1,S3).

8. Circuit as claimed in any one or more of claims 1 to 7,
**characterized** in that the occurrence of a defect causing limitation or prevention of the ABS/TCS function only, and the occurrence of a defect causing also prevention of the electronic brake force distribution control function initiate different warning signals.

9. Circuit as claimed in claim 8,
**characterized** in that a first warning lamp will light upon the occurrence of a defect causing limitation or prevention of the ABS/TCS function only, and a second warning lamp will light in addition upon the disconnection of the entire control system (EBV and ABS/TCS).

## Revendications

1. Agencement de circuit pour un système de freinage à régulation électronique de la répartition de force de freinage sur les freins de roue de l'essieu avant et de l'essieu arrière, ci-après appelée EBV, et à régulation électronique antiblocage, ci-après appelée ABS, et/ou régulation électronique du glissement de traction, ci-après appelée ASR, comprenant
des valves hydrauliques (3-6, 8-11) à commande électrique dans les trajets d'agent de pression menant aux freins de roue et dans les trajets de retour par lesquels de l'agent de pression est évacué dans les phases de suppression de pression,
des capteurs de roue (S1-S4) servant à déterminer le comportement des différentes roues (VL, VR, HL, HR) en rotation et des circuits électriques (12 ; 14-17) servant à exploiter les signaux de capteur, à former une vitesse de référence de véhicule et à produire les signaux de pression de freinage ou de commande de valve,
des circuits (13 ; 20) servant à surveiller le système de freinage et à arrêter partiellement ou totalement ou à commuter la régulation en fonction de défauts ou de fonctionnements erronés et/ou de la situation instantanée de régulation ou de conduite,
caractérisé en ce qu'en cas de défaillance d'un capteur (S1 à S4) ou en cas de signal de capteur erroné, la vitesse de référence de véhicule (V_{REF}) est formée sur la base des capteurs intacts, une fonction EBV continue d'être autorisée, mais, en revanche, une fonction ABS ou ASR est limitée ou interrompue,
en ce que les deux roues arrière (HR, HL) font l'objet d'une régulation synchronisée lorsque le capteur défaillant est un capteur de roue arrière (S2 ou S4) et
en ce que, lorsque la tension d'alimentation descend au-dessous d'une valeur limite préfixée, tant que la tension d'alimentation (U_{B}) est encore située au-dessus d'une seconde valeur limite préfixée plus faible, une fonction EBV est aussi autorisée, mais, en revanche, une fonction ABS/ASR est limitée ou interrompue.

2. Agencement de circuit pour un système de freinage à régulation électronique de la répartition de force de freinage sur les freins de roue de l'essieu avant et de l'essieu arrière, ci-après appelée EBV, et à régulation électronique antiblocage, ci-après appelée ABS, et/ou régulation électronique du glissement de traction, ci-après appelée ABS et/ou ASR, comprenant
des valves hydrauliques (3-6, 8-11) à commande électrique dans les trajets d'agent de pression menant aux freins de roue et dans les trajets de retour,
des capteurs de roue (S1-S4) servant à déterminer le comportement des différentes roues (VL, VR, HL, HR) en rotation et des circuits électriques (12 ; 14-17) servant à exploiter les signaux de capteur, à former une vitesse de référence de véhicule et à produire les signaux de pression de freinage ou de commande de valve,
des circuits (13 ; 20) servant à surveiller le système de freinage et à arrêter partiellement ou totalement ou à commuter la régulation en fonction de défauts ou de fonctionnements erronés et/ou de la situation instantanée de régulation ou de conduite,
caractérisé en ce qu'en cas de défaillance ou en cas de signal erroné de l'un des deux capteurs de roue avant (S1, S3) et de l'un des deux capteurs de roue arrière (S2, S4), la vitesse de référence de véhicule (V_{REF}) est formée sur la base des capteurs intacts, une fonction EBV continue d'être autorisée, mais, en revanche, une fonction ABS ou ASR est limitée ou interrompue,
en ce que les deux roues arrière (HR, HL) font l'objet d'une régulation synchronisée lorsque le capteur défaillant est un capteur de roue arrière (S2 ou S4) et
en ce que, lorsque la tension d'alimentation descend audessous d'une valeur limite préfixée, tant que la tension d'alimentation (U_{B}) est encore située au-dessus d'une seconde valeur limite préfixée plus faible, une fonction EBV est aussi autorisée, mais, en revanche, une fonction ABS/ASR est limitée ou interrompue.

3. Agencement de circuit suivant la revendication 1 ou 2, caractérisé en ce que celui-ci est prévu pour un système de freinage comportant un système de pompe (7) servant a l'alimentation en pression auxiliaire ou au retour de l'agent de pression et en ce qu'en cas de défaut ou d'un fonctionnement erroné du système de pompe (7), une fonction EBV continue d'être autorisée, mais, en revanche, une fonction ABS/ASR est limitée ou interrompue.

4. Agencement de circuit suivant une ou plusieurs des revendications 1 à 3, caractérisé en ce qu'en cas d'erreur qui empêche un actionnement d'une ou plusieurs des valves hydrauliques de roue avant (3, 8 ; 5, 10), la fonction EBV continue d'être autorisée, mais, en revanche, la fonction ABS/ASR est interrompue.

5. Agencement de circuit suivant une ou plusieurs des revendications 1 à 4, caractérisé en ce qu'en cas d'erreur qui empêche un actionnement d'une valve d'entrée de roue arrière (4 ou 6), la fonction EBV continue d'être autorisée, mais, en revanche, la fonction ABS/ASR est interrompue.

6. Agencement de circuit suivant une ou plusieurs des revendications 1 à 5, caractérisé en ce qu'en cas d'erreur qui empêche un actionnement d'une valve de sortie de roue arrière (9 ou 11), la fonction EBV est maintenue et la valve d'entrée (respectivement 4 ou 6) de la roue (respectivement HR ou HL) comportant la valve de sortie (respectivement 9 ou 11) défectueuse est commutée en position de blocage.

7. Agencement de circuit suivant une ou plusieurs des revendications 1 à 6, caractérisé en ce qu'en cas de défaillance ou de fonctionnement erroné d'un capteur de roue avant (S1, S3), une régulation de la pression de freinage de roue avant en mode ABS ou ASR est interrompue.

8. Agencement de circuit suivant une ou plusieurs des revendications 1 à 7, caractérisé en ce que l'apparition d'un défaut à l'occasion duquel seule la fonction ABS/ASR est limitée ou interrompue et l'apparition d'un défaut à l'occasion duquel la fonction EBV est aussi interrompue déclenchent des signaux d'avertissement différents.

9. Agencement de circuit suivant la revendication 8, caractérisé en ce qu'en cas de défaut qui ne fait que limiter ou interrompre la fonction ABS/ASR, une première lampe d'avertissement s'allume et, en cas d'arrêt de l'ensemble de la régulation (EBV et ABS/ASR), une seconde lampe d'avertissement s'allume en plus.
